# EUROPEAN PATENT APPLICATION

(11) **EP 2 595 366 A1**
(43) Date of publication of application: **22.05.2013**
(21) Application number: 11190240.9
(22) Date of filing: 23.11.2011
(51) Int. Cl.: H04M 1/22, G06F 3/042, G06F 3/033

(54) **Touch tracking optical input device**

(30) Priority: 18.11.2011 US 201113299468
(71) Applicant: Research In Motion Limited, Waterloo, ON N2L 3W8 (CA)
(72) Inventor: Masser, Paul, Waterloo, ON N2L 3W8 (CA); Pegg, Albert Murray, Waterloo, ON N2L 3W8 (CA); Kyowski, Timothy Herbert, Waterloo, ON N2L 3W8 (CA); Huang, Li, Waterloo, ON N2L 3W8 (CA); Boomhous, Benjamin William, Waterloo, ON N2L 3W8 (CA); Sulem, Firmansyah Kuncoko, Waterloo, ON N2L 3W8 (CA); Boka, Arthur Carol, Waterloo, ON N2L 3W8 (CA)
(74) Representative: Hibbert, Juliet Jane Grace

(57) **Abstract**

A trackpad has a cover abutting a housing. The cover includes a body that is transparent to infrared light and visible light. A first ink, deposited in a first area on a surface of the cover body, is transmissive to the infrared light and substantially opaque to visible light. A second ink is deposited in at least one second area on the surface of the cover body and is transmissive to visible light. A first emitter, within the housing, produces infrared light that is transmitted through the cover. A second emitter, within the housing, produces visible light that is transmitted through each second area of the cover. An optical sensor is provided within the housing for receiving infrared light that is reflected by an external object back through the cover.

## Description

### Background

The present disclosure relates to input devices for an electronic apparatus; and more particularly to an input device which senses a user's placement of a finger or other object at a position on a surface of the device. That sensed position is used to locate a cursor or other indicator on a display screen, for example.

Trackpad input devices have been devised that enable the user of an electronic apparatus to manipulate a cursor on a display screen by moving a finger or a stylus across the surface of the device. Various types of sensing mechanisms have been developed to detect the position of the finger on the trackpad surface and produce electrical signals indicating that position. Those signals then are used to determine a location on the display screen at which to draw the cursor. One common position sensing mechanism is an optical system, such as the one disclosed in U.S. Patent No. 7,723,669. In that system, an internal emitter sends a light beam through a window in the apparatus housing. When the user places a finger or other object on the outer surface of the window, light is reflected back into the housing and strikes an optical sensor. The sensor produces signals that indicate the position and motion of the finger across the window and those signals are used to control the cursor.

When the cursor is located at a desired position on the screen, such as that of a menu item to be selected, the user presses the trackpad surface which activates an internal switch. The switch sends another electrical signal to the control circuitry of the electronic apparatus, thereby indicating selection by the user of the item displayed at the present position of the cursor.

Some of these devices employ infrared light so that the window can be visibly opaque for aesthetic reasons. The window, however, may be transparent to the infrared light. Typically the window is fabricated of a plastic that is tinted to be opaque to visible light and yet be transparent to the infrared light.

For use in dimly lit environments, the display screen can be backlit so that the image being presented can be viewed by the user. In order that the user could locate the trackpad on the electronic apparatus in similar conditions, an adjacent visible light element can also be provided. In one prior apparatus, a circular light guide is placed around the trackpad and illuminated with visible light. The circular light guide, may limit the placement of other input devices, such as those of a keypad, in close proximity to the trackpad, which presents a problem when space on the face of the electronic apparatus is limited.

### Brief Description of the Drawings

FIGURE 1 is a plane view of a wireless portable communication device incorporating the present trackpad input device;

FIGURE 2 is an exploded view of the trackpad input device;

FIGURE 3 depicts an interior surface of a cover on the trackpad input device;

FIGURE 4 is a cross-sectional view of the trackpad input device taken along line 4-4 in Figure 3; and

FIGURE 5 is a side view illustrating an assembly by which the trackpad input device is mounted inside a case of the wireless portable communication device.

### Detailed Description

The present touch tracking optical input device for brevity will be referred to herein as a "trackpad". The trackpad comprises a housing against which a cover abuts to form a faceplate of the device. The cover includes a body that is transparent to both infrared and visible light. A first ink is deposited in a first area on a surface of the body, wherein the first ink is transmissive to infrared light and substantially opaque to visible light.

A first emitter is oriented within the housing to produce infrared light that is transmitted through the first area of the cover. An optical sensor is mounted within the housing to receive the infrared light which is reflected by an external object and thereafter passes back through the cover.

In one embodiment of the touch tracking optical input device, a second ink is deposited in a second area on the surface of the cover. The second ink is transmissive to visible light. A second emitter, within the housing, produces visible light which is transmitted through the second area on the cover. This, for example, provides a human visible indicator by which a user of the input device can locate a region on the cover to touch with an object to produce an input signal from the optical sensor.

References herein to directional relationships and movement, such as top and bottom or left and right, refer to the relationship and movement of the components in the orientation illustrated in the drawings, which may not be the orientation of the components when attached to other apparatus.

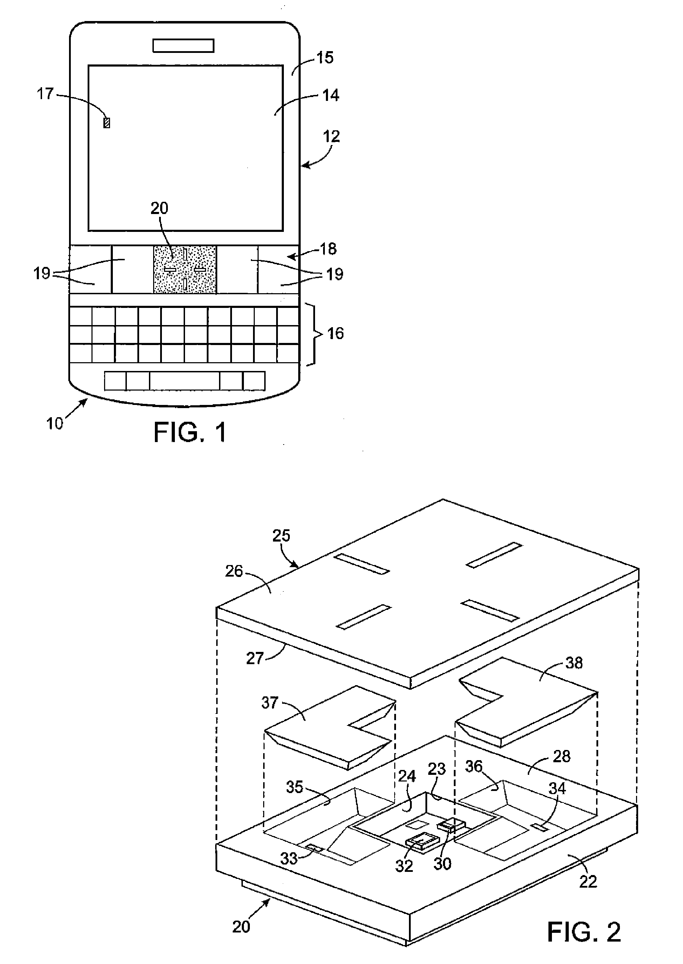

Figure 1 illustrates a wireless, portable communication device or electronic apparatus 10, such as a smart phone, a handheld electronic device, or a personal digital assistant. The portable communication device 10 has a case 12 with a display screen 14. A QWERTY alphanumeric keypad 16 is provided for the user to enter letters, numbers and symbols, although it is appreciated that the keypad 16 could also be a virtual keypad, reduced QWERTY keypad or other physical keypad, for example. An additional set of input devices 18 is provided for certain dedicated functions. In the present disclosure, four other keys 19 are provided in the additional set of input devices 18 for dedicated functions, such as to make or answer a telephone call, end a telephone call, access menus, and move back one screen image, for example. The term "key" as used herein is synonymous with a pushbutton electrical switch. Another input device is a trackpad 20, sometimes referred to as an "optical navigation module," that optically senses the position of an object placed against the device. A control circuit (not shown) in the portable communication device 10 responds, in a conventional manner, to position indicating electrical signals from the trackpad 20 by locating an indicator 17, such as a cursor, on the display screen 14.

With reference to Figure 2, the trackpad 20 has a housing 22 with a major surface 28. An internal chamber 24 extends into the housing 22 from an opening 23 centrally located in the major surface 28. A cover 25 abuts the major surface 28 of the housing 22 and thereby extends across the internal chamber 24 so as to extend entirely across and over the opening 23. The cover 25 is attached to the major surface 28 by an adhesive or other suitable fastening means.

A first emitter 30 is located within the chamber 24 and transmits infrared light upward in a wide two-dimensionally angled beam. Additional first emitters may be provided within the chamber 24 so as to illuminate the entire portion of the cover 25 that extends over the chamber. For example, the infrared light has a wavelength of 850 nanometers, however, other wavelengths of infrared light can be used. The infrared light from the first emitter 30 passes outward through the cover 25. As will be described, an external object touching the cover 25 will reflect some of that light back into the chamber 24. An optical sensor 32 is located within the chamber 24 to receive that reflected light. For instance, the optical sensor 32 may create a two-dimensional image of the object that reflected the infrared light. Preferably the optical sensor 32 is configured so as to respond only to light that is reflected by an object touching an exterior surface 26 of the cover 25 and not to light reflected by more remote objects.

For example, if a user of the portable communication device 10 places a finger on the exterior surface 26 of the trackpad 20, the optical sensor 32 creates an image of the finger. The control circuit receives the image and determines the center of the area being touched. The position of the center of the touched area is used by the control circuit to determine a location for the cursor 17 on the display screen 14. The control circuit also detects either movement of the touched area's center or of features in the image, such as the ridges of the fingerprint. Such movement is used to move the cursor on the display screen. Other objects, such as a tip of a stylus, can be used in place of a finger.

A pair of second emitters 33 and 34 is located in cavities 35 and 36 defined in the major surface 28 on opposite sides of the internal chamber 24. The second emitters 33 and 34 produce visible light, i.e., light which is visible to the human eye. A separate L-shaped light guide 37 or 38 is located in one of the cavities 35 or 36, and over the respective second emitter 33 or 34. The L-shaped light guides 37 and 38 extend around opposite corners of the rectangular internal chamber 24, although it is appreciated that the light guides may have other shapes. When located in the cavities 35 and 36, upper surfaces of the light guides 37 and 38 are coplanar or flush with the major surface 28 of the housing 22. The light guides 37 and 38 receive the visible light produced by the second emitters 33 and 34.

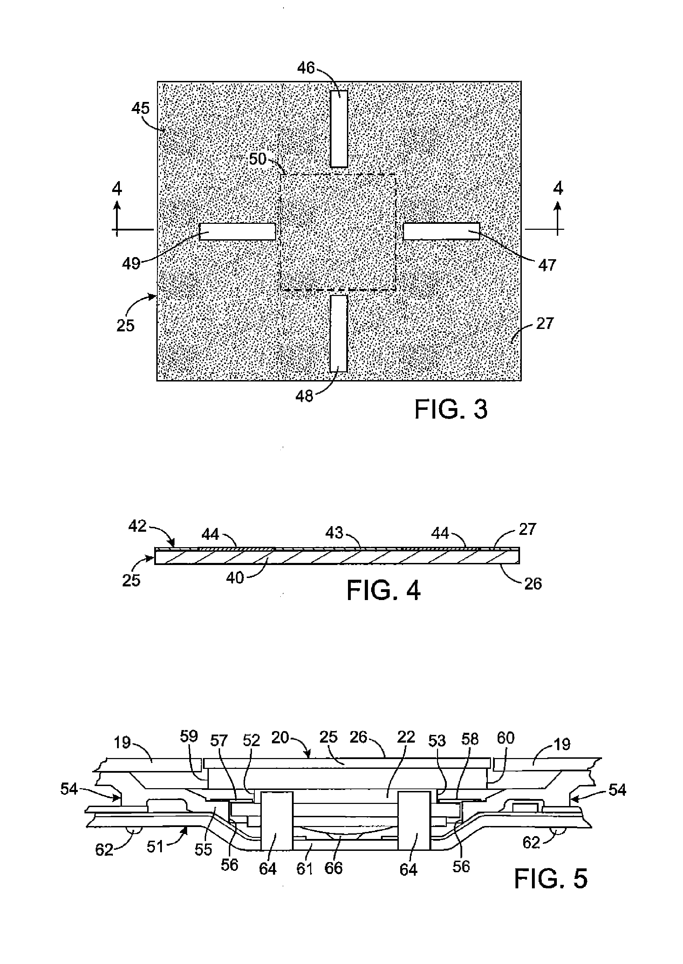

The cover 25, when attached to the housing 22, extends over the internal chamber 24 and both light guides 37 and 38. With additional reference to Figures 3 and 4, the cover 25 comprises a sheet-like body 40 of glass that is transparent to both infrared and visible light. Alternatively, other transparent materials, such as a plastic, can be used for the cover body. A layer 42 of ink is applied to an interior surface 27 of the body 40. For example, the inks used in the layer 42 can be GLS-HF type ink manufactured by Teikoku Printing Inks Manufacturing Co., Ltd. of Tokyo, Japan. A first ink 43 is applied, such as by screen printing for example, over a first area 45 encompassing most of the interior surface. The first ink 43 is transmissive to the infrared light produced by the first emitter 30, but is substantially opaque to visible light. Being transmissive to infrared light means the ink does not substantially attenuate that light upon passing from the first emitter 30 out of the housing 22 through the cover and upon being reflected by an object back through the cover into the chamber 24. The term "substantially opaque to visible light" means that the human eye cannot see through that area of the cover and observe the components located within the internal chamber 24. For that purpose, the first ink 43 does not have to be absolutely opaque, but only has to be sufficiently non-transparent so as to screen the internal components from being visible outside of the trackpad 20.

A second ink 44 is applied, such as by screen printing for example, in four rectangular second areas 46, 47, 48 and 49 on the interior surface 27 of the body 40. A first pair 46 and 48 of those second areas are aligned on a first line extending in one dimension through the center of the interior surface, and a second pair 47 and 49 of the second areas lie on a second line that is orthogonal to the first line and also extends through the center point of the interior surface 27 of the body 40. The second areas 46-49 are spaced apart with a central sensing region 50 there between, as indicated by the dashed lines in Figure 3. The sensing region 50 lies over the chamber 24 in the housing 22 of the trackpad 20 and corresponds to the portion of the surface of the cover 25 in which motion of the user's finger is detected. The second areas 46-49 lie over the light guides 37 and 38 and receive visible light from the second emitters 33 and 34. The rectangular second areas 46-49 are arranged in a cross-hair pattern with the sensing region at the center of that pattern. Alternatively, other patterns of one or more second areas defined by the second ink may be used. For example, the second area could be a ring extending around the sensing region 50. The second ink 44 may be white or a color or alternatively the second emitters 33 and 34 may emit white or another color of light.

The second ink 44 is transmissive to the visible light from the second emitters 33 and 34. Preferably the second ink 44 is translucent to visible light, so that the user is unable to see the internal trackpad components through the second areas 46-49 of the cover 25. The difference in light transmissivity of the first and second inks 43 and 44 provides optical contrast between the first area 45 and the second areas 46-49. Thus the second areas 46-49 are visibly distinct to the user from the first area 45.

When the screen 14 of the portable communication device 10 is backlit during dark ambient light conditions, the second emitters 33 and 34 are also activated to send visible light through the second areas 46-49 of the cover 25. This illuminates the cross-hair pattern of the second areas 46-49 and indicates the sensing region 50 to the user under dark ambient light conditions.

Because the trackpad 20 senses motion only in the sensing region 50 of the cover 25, it should be appreciated that the first ink 43 need only be applied to that area of the cover body 40, as only that area needs to be transmissive to the infrared light. A third type of ink (not shown), which does not have to be transmissive to either visible or infrared light, could be applied to the remainder of the interior surface 27 of the body 40 to the exclusion of the second areas 46-49. In this embodiment, the central sensing region 50 now becomes the first area of the infrared light transmissive ink.

When the second emitters 33 and 34 are turned off, the second ink 44 causes the second areas 46-49 to have a visibly white appearance against the black appearance of the first area 45 of the remainder of the cover surface. For example, the first ink 43 may appear visibly black and yet be transmissive to infrared light of the wavelength produced by the first emitter 30.

Because the second areas 46-49 are defined by the application of the second ink 44 to the surface of the body 40, the size, shape, and pattern of those areas can be easily changed by altering the printing process. Thus trackpads 20 with different appearances can be produced for different models of portable communication devices.

With reference to Figure 1, the trackpad 20 and the keys 19 in set 18 are part of an assembly 51 that is secured to a printed circuit board (not visible) inside the portable communication device 10, with the trackpad and those keys projecting through an opening in a face 15 of the case 12. The exterior surfaces of each of these input devices 19 and 20 are close to each other with no other element there between. The size of each of those exterior surfaces that are engaged by a user is maximized by minimizing the space between adjacent input devices.

Figure 5 illustrates how the trackpad 20 is mounted in that assembly 51. The housing 22 of the trackpad 20 has recesses 52 and 53 in opposing side walls 59 and 60. The assembly 51 has an elongated, rigid plastic bracket 54 which supports the trackpad 20 and the keys 19. A slot 56 extends partially across the width of the bracket 54 from a longitudinal first edge 55 that is facing the viewer of Figure 5. Two plate-like, metal members 57 and 58 are molded into the plastic bracket 54 and project into the slot 56 and into the recesses 52 and 53 in the housing 22 of the trackpad 20. Engagement of the members 57 and 58 with the housing 22 retains the trackpad 20 from passing through the opening in the face 15 of the communication device case 12. Supporting and retaining the trackpad 20 (and the adjacent keys 19) from beneath the face 15 of the communication device 10 with the bracket 54 eliminates the need for support and retainer elements between adjacent ones of those input devices. This structure the enables each input devoice 19 and 20 to have a larger exterior surface for activation by a user.

During assembly, the trackpad 20 is inserted into the slot 56 from the first edge 55 of the bracket 54. Then an elongated retainer 61 is placed against a bottom surface of the bracket 54 so that the retainer extends underneath the trackpad 20. Specifically, a pair of posts 62 project downward from the bottom surface of the plastic bracket 54. The retainer 61 has apertures through which those posts 62 project. The retainer 61 is pushed upward onto the posts 62 and against the bottom surface of the bracket 54. A heated tool is then placed against exposed ends of the posts 62, causing the plastic to melt and form a head that holds the retainer against the bracket 54. The retainer 61 has a pair of tabs 64 that extend upward along a side of the housing 22 of the trackpad 20, thereby retaining the trackpad in the slot 56 of the bracket 54.

A pushbutton switch 66 projects outward from the bottom of the trackpad housing 22 and contacts the retainer 61. Note that each of the metal members 57 and 58, molded into the plastic bracket 54, is thinner than the height of the respective recess 52 and 53 in the trackpad housing 22. This allows the trackpad housing 22 to move downward toward the retainer 61 when the finger of a user exerts a downward force on the cover 25. This motion operates the switch 66 producing an electrical signal indicating operation by the user. The conventional internal spring in the pushbutton switch 66 normally pushes the trackpad housing 22 upward away from the retainer 61 until the wall of the recess 52 and 53 engage the metal members 57 and 58 on the plastic bracket 54 as shown in Figure 5. In this normal position, in which the user is not exerting a significant downward force on the cover 25, the exterior surface 26 of the cover is flush with the exterior surfaces of the adjacent keys 19 and the face 15 of the portable communication device 10.

A ribbon cable (not shown) extends from the housing 22 of the trackpad 20 to the control circuit of the portable communication device 10. The ribbon cable has a plurality of electrical conductors that carry data signals from the optical sensor 32 and from the switch 66.

The present trackpad has a cover with an optically transmissive body to which an ink layer is applied to define the appearance of the trackpad to the user. Different inks may be applied to different areas of the ink layer to delineate a touch sensing area and to visually identify that touch sensing area. A bracket can support components of the trackpad from inside an electronic device thereby, enabling trackpad to abut other input devices and provide a compact array of such devices.

The foregoing description was primarily directed to one or more embodiments of the disclosure. Although some attention has been given to various alternatives within the scope of the disclosure, it is anticipated that one skilled in the art will likely realize additional alternatives that are now apparent from disclosure of embodiments of the disclosure. Accordingly, the scope of the disclosure should be determined from the following claims and not limited by the above disclosure.

## Claims

1. A touch tracking optical input device for an electronic apparatus comprising:
a housing;
a cover adjacent to the housing and including a body that is transparent to infrared light and visible light, wherein the body has a surface, the cover further comprising a first ink deposited in a first area on the surface, wherein the first ink is transmissive to the infrared light and substantially opaque to visible light;
a first emitter within the housing for transmitting infrared light through the cover; and
an optical sensor within the housing for receiving the infrared light that is reflected and thereafter passes through the cover.

2. The touch tracking optical input device as recited in claim 1 wherein the body of the cover is a sheet of glass.

3. The touch tracking optical input device as recited in claim 1 wherein the surface of the body faces toward the housing.

4. The touch tracking optical input device as recited in claim 1 wherein the cover further comprises a second ink deposited in a second area on the surface of the body and being transmissive to visible light; and further comprising a second emitter within the housing for transmitting visible light through the second area of the cover.

5. The touch tracking optical input device as recited in claim 4 further comprising plurality of second areas in which the second ink is deposited on the surface of the body, wherein the plurality of second areas are arranged around a sensing region of the cover through which the infrared light passes.

6. The touch tracking optical input device as recited in claim 4 further comprising plurality of second areas in which the second ink is deposited on the surface of the body, wherein a first pair of second areas has a sensing region there between through which the infrared light passes and lie on a first line, and a second pair of second areas has the sensing region there between and lie on a second line that is orthogonal to the first line.

7. The touch tracking optical input device as recited in claim 1 further comprising a switch that produces an electrical signal in response to actuation of the cover.

8. The touch tracking optical input device as recited in claim 1 further comprising a bracket having a longitudinal edge from which a slot extends into the bracket and within which slot the housing is received.

9. The touch tracking optical input device as recited in claim 8 wherein the housing has two opposing side walls each having a recess therein; and the bracket comprises at least one member that extends into those recesses.

10. The touch tracking optical input device as recited in claim 8 further comprising a retainer connected to the bracket and engaging the housing, thereby retaining the housing in the slot of the bracket.

11. The touch tracking optical input device as recited in claim 10 further comprising a switch that produces an electrical signal in response to actuation of the cover, and wherein the switch engages the retainer.

12. The touch tracking optical input device as recited in claim 8 wherein the bracket is mounted inside a case of the electronic apparatus, wherein only the cover is exposed through an opening in the case.

## Amended claims

### Amended claims in accordance with Rule 137(2) EPC.

**1.** A touch tracking optical input device for an electronic apparatus comprising:
a housing;
a cover (25) adjacent to the housing, the cover (25) including a body (40) that is transparent to infrared light and visible light, wherein the body (40) has a surface (27) through which reflected infrared light passes, the cover further comprising a first ink deposited in a first area (45) on the surface, wherein the first ink is transmissive to the infrared light and substantially opaque to visible light;
a first emitter (30) within the housing for transmitting infrared light from inside the housing through the cover (25); and
an optical sensor (32) within the housing for receiving the infrared light that is reflected outside the housing and thereafter passes through the cover.

**2.** The touch tracking optical input device as recited in claim 1 wherein the body of the cover is a sheet of glass.

**3.** The touch tracking optical input device as recited in claim 1 wherein the surface of the body faces toward the housing.

**4.** The touch tracking optical input device as recited in claim 1 wherein the cover further comprises a second ink deposited in a second area on the surface of the body and being transmissive to visible light; and further comprising a second emitter within the housing for transmitting visible light through the second area of the cover.

**5.** The touch tracking optical input device as recited in claim 4 further comprising plurality of second areas in which the second ink is deposited on the surface of the body, wherein the plurality of second areas are arranged around a sensing region of the cover through which the infrared light passes.

**6.** The touch tracking optical input device as recited in claim 4 further comprising plurality of second areas in which the second ink is deposited on the surface of the body, wherein a first pair of second areas has a sensing region there between through which the infrared light passes and lie on a first line, and a second pair of second areas has the sensing region there between and lie on a second line that is orthogonal to the first line.

**7.** The touch tracking optical input device as recited in claim 1 further comprising a switch that produces an electrical signal in response to actuation of the cover.

**8.** The touch tracking optical input device as recited in claim 1 further comprising a bracket having a longitudinal edge from which a slot extends into the bracket and within which slot the housing is received.

**9.** The touch tracking optical input device as recited in claim 8 wherein the housing has two opposing side walls each having a recess therein; and the bracket comprises at least one member that extends into those recesses.

**10.** The touch tracking optical input device as recited in claim 8 further comprising a retainer connected to the bracket and engaging the housing, thereby retaining the housing in the slot of the bracket.

**11.** The touch tracking optical input device as recited in claim 10 further comprising a switch that produces an electrical signal in response to actuation of the cover, and wherein the switch engages the retainer.

**12.** The touch tracking optical input device as recited in claim 8 wherein the bracket is mounted inside a case of the electronic apparatus, wherein only the cover is exposed through an opening in the case.

**13.** An electronic device incorporating a touch tracking optical input device as recited in any preceding claim.
